# FASCICULE DE BREVET EUROPEEN

(11) **EP 3 366 122 B1**
(45) Date de publication et mention de la délivrance du brevet: **13.03.2019**
(21) Numéro de dépôt: 17290029.2
(22) Date de dépôt: 27.02.2017
(51) Int. Cl.: A01K 1/015

(54) **UTILISATION DE MATRICES POLYMERES ODORANTES POUR LITIERES**
VERWENDUNG VON WOHLRIECHENDEN POLYMEREN MATRIZEN FÜR TIERSTREU
USE OF ODOROUS POLYMER MATRICES FOR LITTERS

(43) Date de publication de la demande: 29.08.2018
(73) Titulaire: AB7 Innovation S.A.S.U., 31450 Deyme (FR)
(72) Inventeur: Chelle, René, 31450 Deyme (FR); Vilbert, Arnaud, 31450 Baziège (FR); Couraud, Aurélien, 31300 Toulouse (FR)

(56) Documents cités:
- FR-A1- 2 901 172
- GB-A- 1 533 261
- JP-A- 2007 000 508
- US-A- 3 921 581

## Description

La présente invention est située dans le domaine de produits odorants ou désodorisants destinés à lutter contre les mauvaises odeurs des litières pour animaux. Plus particulièrement, la présente invention a trait à une nouvelle utilisation des supports solides entièrement en matériau plastique, non hydro-absorbants chargés de substances odorantes, destinés à être appliqués dans les litières des animaux pour lutter contre les mauvaises odeurs.

L'émission quotidienne des matières fécales et d'urines par les animaux de compagnie conduit à la mise au point de diverses litières, qui disposées dans des bacs, permettent de recueillir les déjections de ces animaux. Pour des raisons de confort et d'hygiène le lit de ces litières est formé de produits ayant comme objectif l'absorption des liquides et la réduction des mauvaises odeurs notamment celle de l'ammoniac dont la formation résulte de la décomposition, par des microbes, de l'acide urique en urée et en dioxyde de carbone.

Une odeur est due à un ensemble de complexe de composés chimiques présents dans l'air, perçu par notre système olfactif. Elle se caractérise par sa qualité, son intensité et son acceptabilité. Dans la majorité des cas, ce sont les composés soufrés qui produisent les plus fortes odeurs ; mais on peut également citer des composés phosphorés, sulfurés, ainsi que d'autres molécules comme des aldéhydes, des cétones, des alcools et des esters.

La méthode de l'élimination des mauvaises odeurs par des huiles essentielles a fait ses preuves depuis longtemps. La perception subjective d'odeurs peut être influencée par la formation de paires, dites de Zwaardemaker. On constate alors une diminution, voire une disparition de l'odeur, sans réduction importante de la concentration des matières odorantes. Le masquage des odeurs doit également être rangé dans le domaine de la perception subjective des odeurs.

Ainsi, il est connu que le lit des litières est traditionnellement constitué de supports solides essentiellement d'origine minérale tels que les argiles et ses dérivées comme les sépiolites, les bentonites, la pouzzolane, les silices, le sable (exemples : DE2832194, DE19509747, US2010147225) ou d'origine végétale comme du papier, des broyats et des brisures de bois (exemples : US20130269623, WO2013021406, EP1353548, US4206718, US4727824, US4883021, US5109804, US5152250, US5690052, US6014947). Tous ces supports, dont la forme peut être granulaire ou particulaire, constituent majoritairement la couche de litière des animaux. D'autres variantes de supports d'origine minérale associés aux microorganismes sont également connues par exemple par les brevets US6017525 et US5634431.

Mais, les supports solides ci-avant décrits, en retenant l'eau des urines dans la litière, retiennent aussi les microorganismes qui s'y multiplient. Il en résulte un dégagement d'odeurs nauséabondes de fermentation lorsque ces supports sont utilisés seuls. Pour palier à ces inconvénients, de nombreux additifs tels que des produits bactéricides, des solutions renfermant des parfums sont disponibles dans le commerce.

Par exemple, la Demanderesse avait déjà proposé dans le brevet français n°2561865, une composition granulaire minérale constituée de supports inertes adsorbants sur lesquels est fixé un bactéricide pour neutraliser les odeurs d'ammoniac, puis dans la demande de brevet européen n°0566804, une composition granulaire minérale caverneuse et hydroabsorbante. Dans le même registre, la demande de brevet européen n°3081079 décrit une composition aromatique granulaire comprenant un coeur hydroabsorbant enrobé d'une couche hydrophile et du parfum dispersé dans ladite couche. La demande de brevet international n°2011/134074 décrit un matériel granulaire odorant comprenant un substrat minéral associé à un neutralisant d'odeur comme le chlorure de calcium.

La demande de brevet britannique GB-A-1533261 divulgue l'utilisation d'une pluralité de matrices polymères solides en mélange avec au moins un des supports solides granulaires d'origine minérale ou végétale, lesdites matrices étant à base de cellulose, de gomme de guar, d'amidon ou d'argile, c'est à dire des matrices hydrophiles et non lipophiles au sein desquelles est incorporé un principe actif liquide odorant ou désodorisant. Malgré l'abondance de produits déodorants destinés à lutter contre les mauvaises odeurs de la couche de litière pour animaux, il subsiste un problème qui est celui du lessivage, par l'eau des urines, des principes actifs incorporés dans les supports solides hydroabsorbants, lesquels constituent majoritairement le lit ou la couche de litière. Certes, ces supports d'origine minérale se prêtent bien pour une incorporation en grande quantité d'un liquide renfermant un principe actif odorant, mais au détriment d'une durée d'efficacité raccourcie due au fait d'une diffusion rapide et non contrôlée de l'actif.

Pour obvier aux problèmes susmentionnés, la présente invention a pour but de fournir des supports solides chargés de principe actif odorant dont la diffusion, au cours du temps, est prolongée pour lutter contre des mauvaises odeurs des litières des animaux. Au surplus, le principe actif odorant est préservé de l'effet de lessivage par les eaux de l'urine de l'animal, et dans certain cas, de la dégradation chimique et la perte en principe actif utile occasionnées par la basicité des déjections animales.

Au sens de la présente invention, l'on entend par « lutte » contre les mauvaises odeurs l'action qui consiste à éliminer, à réduire, à détruire, à complexer ou à neutraliser les mauvaises odeurs émanant des matières fécales et des composés de décomposition de l'urine d'un animal de compagnie ou de rente. Par ailleurs, par rapport au but recherché par la présente invention, il est donné une signification équivalente en termes de fonction, à l'emploi des vocables « odorant ou désodorisant » relatifs au principe actif qui se diffuse de manière atmosphérique.

La présente invention, a, en conséquence pour objet, l'utilisation d'une pluralité de matrices polymères solides à caractère lipophile, en mélange avec au moins des supports solides granulaires d'origine minérale ou végétale, lesquels constituent majoritairement la couche de litière pour animaux, lesdites matrices étant constituées de polymères lipo-absorbants au sein desquelles est incorporé au moins un principe actif liquide odorant ou désodorisant, dont la diffusion atmosphérique à partir desdites matrices assure la lutte contre les mauvaises odeurs émanant des matières fécales et des composés issus de la décomposition, par des microorganismes, de l'urine contenue dans ladite couche de litière.

Selon une première variante du mode de mise en oeuvre, lesdites matrices lipophiles sont constituées de polymères thermoplastiques de forme granulaire ou particulaire, dont la granulométrie moyenne varie entre 100 µm et 5 mm.

Dans un tel cas, lesdits polymères thermoplastiques sont biodégradables ou non et sont choisis dans le groupe formé par les élastomères de polyuréthane thermoplastiques à base d'esters ou d'éthers, les copolyamides et les polyamides (PA) de grades absorbants, tels que PA6, PA10, PA12, les polyéthers block amides de grades absorbants, les polyéthylènes de grades absorbants, les polyéthylènes greffés amidon, les polyesters, les polymères styréniques tels que les SEBS, SIS, les polyoléfines, les polychlorures de vinyle, les copolymères d'éthylène et d'acétate de vinyle, les polyéthylènes de grade absorbant, les acides poly(alpha-hydroxylé), les polycaprolactones, les polyhydroxyalkanoates, les copolymères de polyesters polyamides, les polyalcools vinyliques, les alcools polyéthylènevinyliques, les copolymères de poly(lactide-glycolides) ou un mélange de ceux-ci.

Avantageusement, le copolymère d'éthylène et d'acétate de vinyle a un taux d'acétate de vinyle compris entre 15 et 60% en poids.

Selon une seconde variante de mise en oeuvre, lesdites matrices sont constituées de polymères thermodurs en polyuréthane coulé, de forme granulaire ou particulaire, dont la granulométrie moyenne varie entre 100 µm et 5 mm. Dans ce cas, la matrice est obtenue, de manière connue, à partir d'un mélange d'une solution liquide de polyols et d'une solution liquide d'isocyanate.

Selon un mode de mise en oeuvre, le principe actif liquide odorant ou désodorisant est choisi parmi des huiles essentielles, des parfums synthétiques, des essences de parfums, des arômes ou un mélange de ceux-ci. De manière avantageuse, la diffusion atmosphérique de certaines huiles essentielles induit également un effet relaxant ou anti-stress, de bien-être chez l'animal ainsi que des effets répulsifs de certains insectes parasites nuisibles qui pourraient coloniser les litières.

Selon un mode de mise en oeuvre, les huiles essentielles sont choisies dans le groupe formé par l'huile essentielle de citron vert, de citron, d'eucalyptus citriodora, de bambou, de cèdre, de pin, de menthe poivrée, de menthe pouliot, de menthe spiccata, de clou de girofle, de lavande, de lavandin, de niaouli, de romarin, d'ylang-ylang, de laurier, de palmarosa, de ravintsara, de cyprès, de valériane, de cataire, de camomille, de gaulthérie ou un mélange de celles-ci et les parfums synthétiques sont choisis dans le groupe formé par des aldéhydes, des cétones, des alcools terpéniques et des esters ou un mélange de ceux-ci.

Avantageusement, l'on assure par la diffusion d'huiles essentielles de cataire, de valériane, de camomille, d'ylang ylang, de lavandin ou un mélange de celles-ci pour l'obtention de l'effet complémentaire relaxant et/ou antistress de l'animal. Parmi les alcools, on peut citer l'alcool cinnamique, le linalol, l'eugénol, l'isoeugénol, le menthol, l'alcool phényléthyl. Parmi les aldéhydes, on peut citer les aldéhydes acycliques et aliphatiques non terpéniques, des aldéhydes alicycliques non terpéniques, des aldéhydes terpéniques, des aldéhydes monosubstitués. Parmi les esters, on peut citer le phényléthyl acétate, l'acétate de linalyle, le benzyl acétate, le benzyle salicylate, le linalyle cinnamate, l'isobutyl benzoate, l'anthranilate de méthyle. Parmi les cétones, on peut citer le méthyle ionone, la carvone. Avantageusement, l'on assure par la diffusion d'huiles essentielles d'eucalyptus citriodora, de menthe poivrée, de menthe pouliot, de menthe spiccata, de lavandin, de niaouli, de romarin de palmarosa, de gaulthérie ou un mélange de celles-ci avec des alcools terpéniques pour l'obtention de l'effet répulsif insectes.

Selon une variante de mise en oeuvre, le principe actif odorant ou désodorisant est mélangé avec un principe actif désinfectant, d'origine naturelle ou synthétique, approprié pour réduire la quantité de population de microorganismes responsables de la décomposition de l'urée de l'urine. Certaines des huiles essentielles à action odorante possèdent également une propriété désinfectante. De manière avantageuse, le principe actif, d'origine naturelle, à action désinfectante peut être choisi parmi le groupe formé par l'huile essentielle d'eucalyptus, l'huile essentielle de cèdre, l'huile essentielle de menthe et l'huile essentielle de niaouli ou le mélange de celles-ci. Les principes actifs d'origine synthétique à action désinfectante sont choisis parmi les amines quaternaires comme le N-alkyl,N-diméthylammonium, les monoterpènes bicycliques comme les pinènes.

Les principes actifs susmentionnés sont formulés sous forme liquide avant d'être incorporés dans la matrice polymère lipo-absorbante. Des additifs de formulation, bien connus de l'homme du métier, peuvent être ajoutés aux principes actifs susmentionnés. Parmi les additifs de formulation, on peut citer des huiles végétales, les esters, des hydrocarbures substantiellement linéaires ou ramifiés, d'origine minérale ou synthétique tels que les huiles minérales, les huiles de paraffines, les huiles de silicones, des colorants, des tensioactifs, des compatibilisants ou un mélange de ceux-ci.

Parmi les huiles végétales, on peut citer à titre indicatif, l'huile de coprah, l'huile d'amande douce, l'huile de ricin, l'huile d'onagre, l'huile de macadamia. Parmi les tensioactifs, on peut citer à titre indicatif les alcools gras liquides tels que les octanol, l'alcool décylique, l'alcool laurylique, l'alcool décanoïque, les esters et éthers de synthèse notamment d'acides gras comme par exemple l'isononanoate d'isononyle, le myristate d'isopropyle, le palmitate d'éthylhéxyle, le stéarate d'octyldodécyle, l'isostéarate d'isostéaryle.

Selon un mode de mise en oeuvre, le principe actif en solution représente entre 1 et 40% en poids du poids total de la matrice polymère. Le procédé d'incorporation dudit principe actif dans la matrice en polymère thermoplastique s'effectue selon les enseignements du brevet FR2901172. Le procédé d'incorporation dudit principe actif dans la matrice en polymère thermodur s'effectue selon les enseignements du brevet FR2992325.

Selon un mode de mise en oeuvre, la pluralité de matrices polymères chargées en principe actif représente entre 0,2 et 20% en poids du poids total de l'ensemble des supports solides dans la couche de litière.

Selon un mode de mise en oeuvre, la pluralité de matrices chargées d'au moins un principe actif odorant est répartie de manière homogène à la surface de la couche de litière, préférentiellement sans y être enfouies, pour permettre la diffusion atmosphérique optimale du principe actif.

Il est entendu que l'action désodorisante apportée par les supports en matrices polymères lipophiles susmentionnés peut être couplée avec celle d'autres produits bactéricides, de produits desséchants ainsi que tout autre produit reconnu pour améliorer le confort et l'hygiène des litières des animaux. Ces produits peuvent prendre la forme d'une suspension pulvérisable, de poudre, ou toute autre forme galénique adaptée pour une utilisation dans les litières. Par exemple, on peut pulvériser sur les supports granulaires d'origine minérale ou végétale, qui constituent la couche de litière, des solutions liquides comprenant du glyoxal.

L'exemple ci-après est donné à titre purement illustratif de la présente invention sans pour autant en restreindre sa portée.

Exemple : Fabrication de granulés de copolymère d'éthylène et d'acétate de vinyle (EVA) chargés à 4% de parfum pour détruire les mauvaises odeurs d'une litière pour chat.

On dispose d'un réacteur en verre d'un volume utile de 1 litre, préchauffé à la température de travail à 65°C dans un bain-marie d'huile. On y introduit 134,97 grammes de granulés d'EVA commercialisés sous la marque ALCUDIA PA538® de REPSOL, ayant un taux d'acétate de vinyle de 18%. On met en marche la pâle agitatrice. Après 10 minutes d'agitation, les granulés ont atteint la température d'incorporation.

Dans un bécher, on introduit 9 grammes de parfum lemon-grass, 6 grammes d'un vecteur qui est un mélange d'esters, commercialisé sous la marque ESTASOL® et 0,03 grammes de colorant rose. On mélange le tout à la température ambiante. Ensuite, on introduit progressivement ce mélange liquide dans les matrices d'EVA. On poursuit l'agitation pendant environ 2 minutes, en maintenant la température à 65°C, avant de refroidir jusqu'à 20°C, en baissant la vitesse d'agitation. On obtient environ 150 grammes de granulés d'EVA secs et très odorants chargés à 4% de parfum lemon-grass.

On répartit 5 grammes de granulés d'EVA odorants obtenus ci-dessus à la surface de la couche en sable fin (0,1 à 0,3 mm) d'une litière ayant une masse de 0,5 kg.

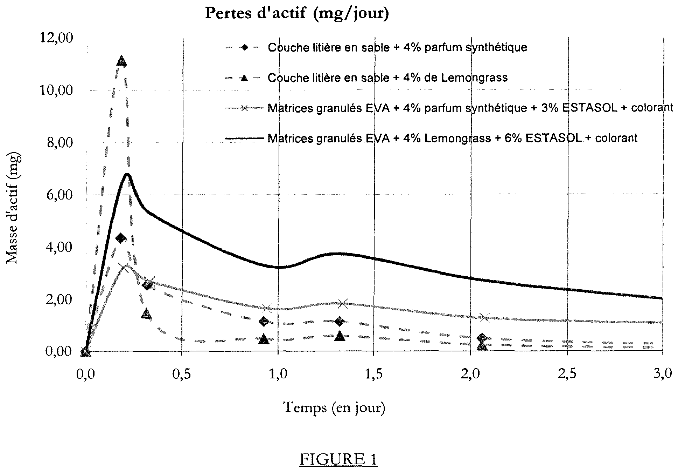

La figure 1 représente la cinétique comparative de diffusion atmosphérique de principe actif odorant incorporé dans une matrice polymère ou directement pulvérisé sur une couche en sable d'une litière.

Comme première référence, on a pulvérisé une solution comprenant 4% de lemon-grass sur une couche de litière en sable fin. Comme seconde référence, on a pulvérisé une solution comprenant 4% de parfum synthétique à base de coumarine et de salicylate d'isoamyle sur une couche en sable d'une litière.

Sur cette figure, on peut voir qu'à quantité initiale égale, la matrice EVA permet d'assurer une diffusion atmosphérique prolongée du parfum. Par ailleurs, la cinétique de diffusion est différente d'un parfum à l'autre et ce en présence de vecteur identique.

Les granulés d'EVA chargés à 4% de parfum Lemon-grass ou 4% de parfum synthétique ci-dessus définis ont été évalués par un panel de 7 évaluateurs des mauvaises odeurs émanant des litières pour chat. Les tests ont été conduits pendant 5 jours sur une quantité moyenne de 14,5 g de granulés d'EVA par litière. Les barèmes des notes sont attribués comme suit :
- Indice = 10 : odeur de granulés EVA fraichement fabriqués c'est-à-dire que la perception par l'évaluateur de l'odeur du parfum incorporé dans la matrice prime sur celle de la litière
- Indice = 5 : odeur neutre c'est-à-dire que l'évaluateur estime que le parfum neutralise la mauvaise odeur.
- Indice <5 : la perception par l'évaluateur de la mauvaise odeur de la litière prime sur l'odeur du parfum émanant de la matrice.

Les résultats des tests sont récapitulés dans le tableau 1.

**Tableau 1 : Résultat de l'évaluation de recouvrance de l'odeur de litière pour chat**

| | Evaluateur | nombre chats | nombre litières | J0 | J1 | J2 | J3 | J4 | J5 |
|---|---|---|---|---|---|---|---|---|---|
| 14 g EVA à Lemongrass | A | 1 | 1 | 10 | 5 | 5 | 5 | 5 | 5 |
| | B | 10 | 4 | 10 | 9 | 7 | 5 | 5 | 5 |
| 14g EVA à 4% parfum synthétique | C | 2 | 1 | 10 | 8 | 7 | 5 | 5 | 5 |
| | D | 1 | 1 | 10 | 8 | 7 | 5 | 5 | 5 |
| | E | 1 | 1 | 10 | 8 | 5 | 4 | 4 | 4 |
| | F | 10 | 4 | 10 | 9 | 8 | 6 | 5 | 5 |
| | G | 2 | 1 | 10 | 7 | 7 | 6 | 5 | 5 |

## Revendications

1. Utilisation d'une pluralité de matrices polymères solides à caractère lipophile, en mélange avec au moins des supports solides granulaires d'origine minérale ou végétale, lesquels constituent majoritairement la couche de litière pour animaux, lesdites matrices étant constituées de polymères lipo-absorbants au sein desquelles est incorporé au moins un principe actif liquide odorant ou désodorisant, dont la diffusion atmosphérique à partir desdites matrices assure la lutte contre les mauvaises odeurs émanant des matières fécales et des composés issus de la décomposition, par des microorganismes, de l'urine contenue dans ladite couche de litière.

2. Utilisation selon la revendication 1, **caractérisée en ce que** lesdites matrices sont constituées de polymères thermoplastiques de forme granulaire ou particulaire, dont la granulométrie moyenne varie entre 100 µm et 5 mm.

3. Utilisation selon l'une des revendications 1 ou 2, **caractérisée en ce que** lesdits polymères thermoplastiques sont biodégradables ou non et sont choisis dans le groupe formé par les élastomères de polyuréthane thermoplastiques à base d'esters ou d'éthers, les copolyamides et les polyamides (PA) de grades lipo-absorbants choisis parmi le PA6, le PA10, le PA12, les polyéthers block amides de grades lipo-absorbants, les polyéthylènes de grade lipo-absorbant, les polyéthylènes greffés amidon, les polyesters, les polymères styréniques choisis parmi les SEBS, SIS, les polyoléfines, les polychlorures de vinyle, les copolymères d'éthylène et d'acétate de vinyle, les acides poly(alpha-hydroxylé), les polycaprolactones, les polyhydroxyalkanoates, les copolymères de polyesters polyamides, les polyalcools vinyliques, les alcools polyéthylènevinyliques, les copolymères de poly(lactide-glycolides) ou un mélange de ceux-ci.

4. Utilisation selon la revendication 3, **caractérisée en ce que** le copolymère d'éthylène et d'acétate de vinyle a un taux d'acétate de vinyle compris entre 15 et 60% en poids

5. Utilisation selon la revendication 1, **caractérisée en ce que** lesdites matrices sont constituées de polymères thermodurs en polyuréthane coulé, de forme granulaire ou particulaire, dont la granulométrie moyenne varie entre 100 µm et 5 mm.

6. Utilisation selon l'une des revendications 1 à 5, **caractérisée en ce que** le principe actif liquide odorant ou désodorisant est choisi parmi des huiles essentielles, des parfums synthétiques, des essences de parfums, des arômes ou un mélange de ceux-ci.

7. Utilisation selon la revendication 6, **caractérisée en ce que** les huiles essentielles sont choisies parmi l'huile essentielle de citron vert, de citron, d'eucalyptus citriodora, de bambou, de cèdre, de pin, de menthe poivrée, de menthe pouliot, de menthe spiccata, de clou de girofle, de lavande, de lavandin, de niaouli, de romarin, d'ylang-ylang, de laurier, de palmarosa, de ravintsara, de cyprès, de valériane, de cataire, de camomille, de gaulthérie ou un mélange de celles-ci.

8. Utilisation selon la revendication 6, **caractérisée en ce que** les parfums synthétiques sont choisis dans le groupe formé par des aldéhydes, des cétones, des alcools et des esters ou un mélange de ceux-ci.

9. Utilisation selon l'une des revendications 1 à 8, **caractérisée en ce que** le principe actif odorant ou désodorisant est mélangé avec un principe actif désinfectant, d'origine naturelle ou synthétique, approprié pour réduire la quantité de population de microorganismes responsables de la décomposition de l'urée de l'urine.

10. Utilisation selon l'une des revendications 1 à 9, **caractérisé en ce que** l'on assure par la diffusion d'huiles essentielles de cataire, de valériane, de camomille, d'ylang ylang, de lavandin ou un mélange de celles-ci pour l'obtention de l'effet relaxant.

11. Utilisation selon l'une des revendication 1 à 10, **caractérisée en ce que** l'on assure par la diffusion d'huiles essentielles d'eucalyptus citriodora, de menthe poivrée, de menthe pouliot, de menthe spiccata, de lavandin, de niaouli, de romarin de palrnarosa, de gaulthérie ou un mélange de celles-ci avec des alcools terpéniques pour l'obtention de l'effet répulsif insectes.

12. Utilisation selon l'une des revendications 1 à 11, **caractérisée en ce que** le principe actif représente entre 1 et 40% en poids du poids total de la matrice polymère.

13. Utilisation selon l'une des revendications 1 à 12, **caractérisée en ce que** la pluralité de matrices polymères chargées en principe actif représente entre 0,2 et 20% en poids du poids total de l'ensemble des supports solides dans la couche de litière.

14. Utilisation selon l'une des revendications 1 à 13, **caractérisée en ce que** la pluralité de matrices chargées d'au moins un principe actif odorant est répartie de manière homogène à la surface de la couche de litière, préférentiellement sans y être enfouies.

## Patentansprüche

1. Verwendung einer Vielzahl von festen polymeren Matrizen mit lipophilen Eigenschaften in Mischung mit mindestens festen körnigen Trägem mineralischen oder pflanzlichen Ursprungs, die im Wesentlichen die Einstreuschicht für Tiere bilden, wobei die Matrizen aus lipoabsorbierenden Polymeren gebildet sind, in die mindestens ein Geruchs- oder desodorierender flüssiger Wirkstoff eingeschlossen ist, dessen atmosphärische Verteilung ausgehend von den Matrizen die Bekämpfung von schlechten Gerüchen, die von Fäkalien ausgehen, und von Verbindungen sicherstellt, die aus der Zersetzung des in der Einstreuschicht enthaltenen Urins durch Mikroorganismen hervorgehen.

2. Verwendung nach Anspruch 1, **dadurch gekennzeichnet, dass** die Matrizen aus thermoplastischen Polymeren in Granulat- oder Partikelform gebildet sind, deren durchschnittliche Korngröße zwischen 100 *µ*m und 5 mm variiert.

3. Verwendung nach einem der Ansprüche 1 oder 2, **dadurch gekennzeichnet, dass** die thermoplastischen Polymere biologisch abbaubar sind oder nicht und aus der Gruppe ausgewählt sind, bestehend ausden thermoplastischen Polyurethanelastomeren auf Ester- und Etherbasis, den Copolyamiden und den Polyamiden (PA) mit der Qualität von Lipoabsorptionsmitteln, ausgewählt aus PA6, PA10, PA12, den Polyetherblockamiden mit der Qualität von Lipoabsorptionsmitteln, den Polyethylenenmit der Qualität von Lipoabsorptionsmitteln, den starken Pfropfpolyethylenen, den Polyestern, den Styrolpolymeren, ausgewählt aus SEBS, SIS, den Polyolefinen, den Polyvinylchloriden, den Ethylen-Vinylacetat-Copolymeren, den Poly(alpha-hydroxy)säuren, den Polycaprolactonen, den Polyhydroxyalkanoaten, den Polyamid-Polyester-Copolymeren, den Polyvinylalkoholen, den Polyethylenvinylalkoholen, den Polylaktid-Glykolid-Copolymeren oder einer Mischung davon.

4. Verwendung nach Anspruch 3, **dadurch gekennzeichnet, dass** das Ethylen-Vinylacetat-Copolymereinen Vinylacetatgehalt zwischen 15 und 60 Gew.-% umfasst.

5. Verwendung nach Anspruch 1, **dadurch gekennzeichnet, dass** die Matrizen aus wärmehärtbaren Polymeren aus gegossenem Polyurethan in Granulat- oder Partikelform gebildet sind, deren durchschnittliche Korngröße zwischen 100 *µ*m und 5 mm variiert.

6. Verwendung nach einem der Ansprüche 1 bis 5, **dadurch gekennzeichnet, dass** der Geruchs- oder desodorierende flüssige Wirkstoff aus ätherischen Ölen, synthetischen Duftstoffen, Parfümessenzen, Aromen oder einer Mischung davon ausgewählt ist.

7. Verwendung nach Anspruch 6, **dadurch gekennzeichnet, dass** die ätherischen Öle aus den ätherischen Ölen von Limette, Zitrone, Eukalyptus Citriodora, Bambus, Zeder, Kiefer, Pfefferminze, Polei-Minze, Spearmint-Minze, Nelken, Lavendel, Lavandin, Niaouli, Rosmarin, Ylang-Ylang, Lorbeerblatt, Palmarosa, Ravensara, Zypresse, Baldrian, Katzenminze, Kamille, Wintergrün oder einer Mischung davon ausgewählt ist.

8. Verwendung nach Anspruch 6, **dadurch gekennzeichnet, dass** die synthetischen Duftstoffe aus der Gruppe bestehend aus Aldehyden, Ketonen, Alkoholen und Estern oder einer Mischung davon ausgewählt sind.

9. Verwendung nach einem der Ansprüche 1 bis 8, **dadurch gekennzeichnet, dass** der Geruchs- oder desodorierende Wirkstoff mit einem desinfizierenden Wirkstoff natürlichen oder synthetischen Ursprungs vermischt ist, der geeignet ist, die Populationsgröße von Mikroorganismen zu reduzieren, die für den Abbau von Harnstoff im Urin verantwortlich sind.

10. Verwendung nach einem der Ansprüche 1 bis 9, **dadurch gekennzeichnet, dass** durch die Diffusion von ätherischen Ölen von Katzenminze, Baldrian, Kamille, Ylang-Ylang, Lavandin oder einer Mischung davon sichergestellt wird, dass die entspannende Wirkung erhalten wird.

11. Verwendung nach einem der Ansprüche 1 bis 10, **dadurch gekennzeichnet, dass** durch die Diffusion von ätherischen Ölen von Eukalyptus Citriodora, Pfefferminze, Polei-Minze, Spearmint-Minze, Lavandin, Niaouli, Rosmarin, Palmarosa, Wintergrün oder einer Mischung davon mit Terpenalkoholen sichergestellt wird, dass die Insektenschutzwirkung erhalten wird.

12. Verwendung nach einem der Ansprüche 1 bis 11, **dadurch gekennzeichnet, dass** der Wirkstoff zwischen 1 und 40 Gew.-% des Gesamtgewichts der Polymermatrix darstellt.

13. Verwendung nach einem der Ansprüche 1 bis 12, **dadurch gekennzeichnet, dass** die Vielzahl der mit Wirkstoff beladenen Polymermatrizen zwischen 0,2 und 20 Gew.-% des Gesamtgewichts der Gesamtheit der festen Träger in der Einstreuschicht darstellt.

14. Verwendung nach einem der Ansprüche 1 bis 13, **dadurch gekennzeichnet, dass** die Vielzahl von mit mindestens einem Geruchswirkstoff beladenen Matrizen homogen auf der Oberfläche der Einstreuschicht verteilt ist, vorzugsweise ohne darin vergraben zu sein.

## Claims

1. Use of multiple solid polymer matrices of a lipophilic nature, mixed with at least solid granulated materials of mineral or plant origin,which form the major proportion of the animal litter layer, the said matrices are formed of fat-absorbing polymers within which is incorporated at least an odorous or deodorizing active ingredient in liquid form, whose atmospheric diffusion from these said matrices serves to combat bad odors from fecal matter and compounds from the decomposition, by microorganisms, of urine contained in the said litter layer.

2. Use according to claim 1, **characterized in that** the said matrices are formed of thermoplastic polymers in the form of granules or particles, with an average grain size of between 100 *µ*m and 5 mm.

3. Use according to either claims 1 or 2, **characterized in that** the said thermoplastic polymers are biodegradable or not and are selected from the group formed of thermoplastic polyurethane elastomers based on esters or ethers, absorbent-grade copolyamides and polyamides (PA), such as PA6, PA10, PA12, absorbent-grade polyether block amides, absorbent-grade polyethylenes, starch-grafted polyethylenes, polyesters, styrene polymers such as SEBS, SIS, polyolefins, polyvinyl chlorides, copolymers of ethylene with vinyl acetate, absorbent-grade polyethylenes, poly(alpha hydroxy) acids, polycaprolactones, polyhydroxy alkanoates, polyamide polyester copolymers, polyvinyl alcohols, polyethylene vinyl alcohols, poly(lactic-glycolic) copolymers, or a mix of these.

4. Use according to claim 3, **characterized in that** the level of vinyl acetate in the ethyl vinyl acetate copolymer is between 15 and 60% in weight

5. Use according to claim 1, **characterized in that** the said matrices are formed of thermoset polymers of cast polyurethane in the form of granules or particles, with an average grain size of between 100 *µ*m and 5 mm.

6. Use according to one of claims 1 to 5, **characterized in that** the odorous or deodorizing active ingredient in liquid form is selected from essential oils, synthetic fragrances, fragrance oils, aromas, or a mix of these.

7. Use according to claim 6, **characterized in that** the essential oils are selected from amongst the essential oils of lime, lemon, eucalyptus citriodora, bamboos, cedar, pine, peppermint, pennyroyal, spearmint, clove, lavender, hybrid lavender, niaouli, rosemary, ylang-ylang, bay, palmarosa, ravintsara, cypress, valerian, catnip, chamomile, wintergreen, or a mix of these.

8. Use according to claim 6, **characterized in that** the synthetic fragrances are selected from the group formed of aldehydes, ketones, alcohols and esters, or a mix of these.

9. Use according to one of claims 1 to 8, **characterized in that** the odorous or deodorizing active ingredient is mixed with an appropriate disinfecting active ingredient, of natural or synthetic origin, for reducing the size of the microorganism population responsible for the decomposition of the urea in the urine.

10. Use according to one of claims 1 to 9, characterized in thata relaxing effect is achieved by the diffusion of the essential oils of catnip, valerian, chamomile, ylang-ylang, hybrid lavender, or a mix of these.

11. Use according to one of claims 1 to 10, **characterized in that** an insect repellent effect is achieved by the diffusion of the essential oils of eucalyptus citriodora, peppermint, pennyroyal, spearmint, hybrid lavender, niaouli, rosemary, palmarosa, wintergreen, or a mix of these with terpenic alcohols.

12. Use according to one of claims 1 to 11, **characterized in that** the active ingredient represents between 1 and 40% in weight of the total weight of the polymer matrix.

13. Use according to one of claims 1 to 12, **characterized in that** the multiple polymer matrices laden with the active ingredient represent between 0.2 and 20% in weight of the total weight of all the solid materials in the litter layer.

14. Use according to one of claims 1 to 13, **characterized in that** the multiple matrices laden with at least an odorous active ingredient are distributed in a uniform manner over the surface of the litter layer, preferably without being buried in it.
